Europäisches Patentamt

European Patent Office

Office européen des brevets

(19)

(11) Publication number: **0 208 478**
B1

(12) **EUROPEAN PATENT SPECIFICATION**

(45) Date of publication of the patent specification:
28.12.88

(51) Int. Cl.⁴: **B 60 K 17/346**

(21) Application number: 86304962.3

(22) Date of filing: 26.06.86

(54) Four-wheel vehicle drive system.

(30) Priority: 09.07.85 JP 150897/85

(43) Date of publication of application:
14.01.87 Bulletin 87/3

(45) Publication of the grant of the patent:
28.12.88 Bulletin 88/52

(84) Designated Contracting States:
DE FR GB

(56) References cited:
EP-A- 0 159 925
DE-C- 625 005
GB-A- 1 469 776
GB-A- 2 073 933
GB-A- 2 142 593
US-A- 4 476 953

(73) Proprietor: TOYOTA JIDOSHA KABUSHIKI KAISHA, 1, Toyota-cho Toyota-shi, Aichi-ken 471 (JP)

(72) Inventor: Katayama, Nobuaki, 1-186, Teraike Ryujin-cho, Toyota-shi Aichi-ken (JP)

(74) Representative: Ben-Nathan, Laurence Albert et al, Urquhart-Dykes & Lord 91 Wimpole Street, London W1M 8AH (GB)

ACTORUM AG

## Description

The present invention relates to a four-wheel drive system for an automative vehicle having at least a front and a rear pair of road wheels. More particularly, the present invention relates to improvements in a central differential gear assembly for use in a four-wheel drive system of an automotive vehicle.

A transaxle mechanism, as set out in the preamble of claim 1, is disclosed in US-A-4 476 953. This patent discloses a four wheel vehicle drive system including a transmission output gear, a central differential gear assembly, a first intermediate gear which is fixed to a first side bevel gear of the central differential gear assembly, an intermediate gear shaft, a bevel gear which is fixed to the intermediate gear shaft, a driven bevel gear which is connected to a propeller shaft, a rear differential gear assembly, a front-wheel differential gear assembly and front shafts.

The central differential gear assembly is driven by the transmission output gear and the first side bevel gear of the central differential gear assembly drives the first intermediate gear. The intermediate gear shaft is driven by the first intermediate gear and the bevel gear drives the driven bevel gear. The rear differential gear assembly is driven by the propeller shaft. Further, the second side bevel gear of the central differential gear assembly drives the front-wheel differential gear assembly which drives the front shafts.

Therefore, the four-wheel vehicle drive system can transmit driving torque to front wheels through the transmission output gear, the central differential gear assembly and the front shafts, while the four-wheel vehicle drive system can transmit driving torque to rear wheels through the transmission output gear, the central differential gear assembly, the first intermediate gear, the intermediate gear shaft, the bevel gear, the driven bevel gear, the propeller shaft, the rear differential gear assembly and rear shafts.

More particularly, the central differential gear assembly includes a central differential gear housing, differential bevel pinions and first and second differential side bevel gears. The transmission output gear engages with the central differential bevel pinions which are rotatably mounted on the central differential gear housing. The first and second differential side bevel gears engage with the differential bevel pinions. The first and second differential side bevel gears rotate about a side gear center axis.

Accordingly, engine torque is transmitted from an engine to the first and second differential side bevel gears through a transmission, the transmission output gear, the central differential gear housing and the differential bevel pinions.

Therefore, the central differential gear assembly distributes the engine torque evenly to the first and second differential side bevel gears.

A central differential gear assembly for a four-wheel vehicle drive system is disclosed in JP-U-5 935 119. This Utility Model discloses a central differential gear assembly including a central differential gear housing, differential bevel pinions and first and second differential side bevel gears.

The differential bevel pinions are inclined and a predetermined angle is defined between a side gear center axis and each center axis of the differential bevel pinions.

Accordingly, a first distance, defined between the side gear center axis and a first engaging portion between the first differential side bevel gear and the differential bevel pinions, is longer than a second distance defined between the side gear center axis and a second engaging portion between the second differential side bevel gear and the differential bevel pinions.

As a result, engine torque is transmitted from an engine to the first and second differential side bevel gears proportion to a ratio of the first distance to the second distance, respectively.

However, the central differential gear assembly cannot change the distribution ratio of the torque transmitted to the first and second differential side bevel gears.

The present invention was developed in view of the forgoing background and to overcome the foregoing drawbacks. It is accordingly an object of this invention to provide a four-wheel vehicle drive system which can change a distribution ratio of torque transmitted to first and second central output members. To this end, a vehicle four-wheel drive system in accordance with the present invention is characterised by the features specified in the characterising clause of claim 1.

The above objects, features and advantages of the present invention will become more apparent from the description of the invention which follows, taken in conjunction with the accompanying drawings, wherein like reference numerals denote like elements:

Fig. 1 is a schematic plan view showing a preferred embodiment of a four-wheel vehicle drive system according to the present invention;

Fig. 2 is an enlarged cross-sectional view of a transaxle mechanism of the four-wheel vehicle drive system shown in fig. 1, which is adapted for use in a vehicle having a full time four-wheel vehicle drive system;

Fig. 3 is an enlarged cross-sectional view of a front wheel drive gear unit and transmitting means of the transaxle mechanism of the four-wheel drive system shown in fig. 1;

Fig. 4 is a further enlarged cross-sectional view of a central differential gear assembly shown in fig. 3;

Fig. 5 is an enlarged cross-sectional view taken along the line V-V in fig. 4;

Fig. 6 is an enlarged perspective view of parts of an actuator means for changing a distribution ratio of an engine torque;

Fig. 7 is an enlarged cross-sectional view of the central differential gear assembly and the actuator means, wherein the actuator means and the differential bevel pinions are positioned at a neutral position;

Fig. 8 is an enlarged cross-sectional view of the central differential gear assembly and the actuator means, wherein the actuator means and the differential bevel pinions are in a forward position;

Fig. 9 is an enlarged cross-sectional view of the central differential gear assembly and the actuator means, wherein the actuator means and the differential bevel pinions are in a rearard position;

Fig. 10 is a schematic plan view showing a second embodiment of a four-wheel vehicle drive system according to the present invention; and

Fig. 11 is an enlarged cross-sectional view of a central differential gear assembly shown in fig. 10.

The present invention will be described in detail with reference to the accompanying drawings which illustrate different embodiments according to the present invention.

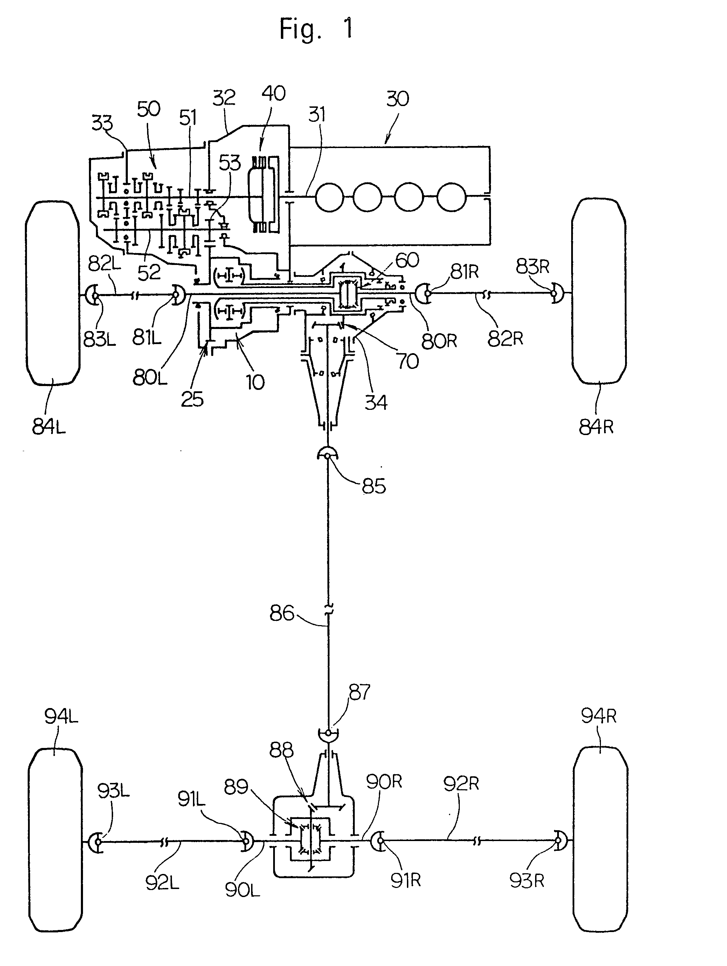

Referring to figure 1, an engine 30 is located in a front portion of a vehicle and a crank shaft 31 of the engine 30 is positioned parallel to the lateral direction of the vehicle. A transmission 50 is located in the front portion of the vehicle and an input shaft 51 of the transmission 50 is located on an extended portion of a rotational center axis of the crank shaft 31. The input shaft 51 is covered with a transmission casing 33 and a clutch housing 32 is located between the transmission casing 33 and the engine 30. A clutch 40 is located within the clutch housing 32. The clutch 40 has a center axis which is located on the extended portion of the rotational center axes of the crank shaft 31 and the input shaft 51. An output shaft 52 of the transmission 50 is located within the transmission casing 33 and the output shaft 52 is parallel to the input 51. The input shaft 51 and the output shaft 52 are rotatably mounted on the transmission casing 33. An output gear 53 is secured to the output shaft 52 and engages with a final reduction gear 25 of a central differential gear assembly 10.

The central differential gear assembly 10 has a rotational center axis which coincides with a rotational center axis of front axles 80L and 80R. An inner end of the left front axle 80L is connected to a front wheel differential gear assembly 60 and an outer end of the left front axle 80L is connected to a first constant velocity or universal coupling unit 81L. An inner end of a left output axle 82L is connected to the first constant velocitly coupling unit 81L and an outer end of the left output axle 82L is connected to a left front wheel 84L through a second constant velocity coupling unit 83L.

In a similar manner, the right front axle 80R is connected to the front wheel differential gear assembly 60 and a first constant velocity coupling unit 81R. An inner end of a right output axle 82R is connected to the first constant velocity coupling unit 81R and an outer end of the right output axle 82R is connected to a right front wheel 84R through a second constant velocity coupling unit 83R.

The front wheel differential gear assembly 60 is connected to a first side bevel gear of the central differential gear assembly 10. The front wheel differential gear assembly 60 is located within a transaxle casing 34 and a right-angle power transfer gear mechanism 70 is covered with the transaxle casing 34. The right-angle power transfer gear mechanism 70 is connected to a second side bevel gear of the central differential gear assembly 10 and a first universal coupling unit 85. A front end of a propeller shaft 86 is connected to the first universal coupling unit 85 and a rear end of the propeller shaft 86 is connected to a rear final reduction gear 88 through the second universal coupling unit 87.

The rear final reduction gear 88 engages with a rear wheel differential gear assembly 89. The rear wheel differential gear assembly 89 includes a pair of side bevel gears.

A right end of a left rear shaft 90L is connected to one of the side bevel gears of the rear wheel differential gear assembly 89 and a left end of the left rear shaft 90L is connected to a first rear constant velocity coupling unit 91L. A right end of a left rear output axle 92L is connected to the first rear constant velocity coupling unit 91L and a left end of the left rear output axle 92L is connected to a left rear wheel 94L through a second rear constant velocity coupling unit 93L.

In a similar manner, a right rear shaft 90R is connected to another one of the side bevel gears of the rear wheel differential gear assembly 89 and to a first rear constant velocity coupling unit 91R. A right rear output axle 92R is connected to the first rear constant velocity coupling unit 91R and to the right rear wheel 94R through a second rear constant velocity coupling unit 93R.

In the vertical direction of the vehicle, the crank shaft 31 of the engine 30 and the input shaft 51 of the transmission 50 are located at a first vertical position which is higher than a second vertical position at which the output shaft 52 of the transmission 50 is located.

The left and right front axle 80L and 80R are located at a third vertical position which is lower than the second vertical position of the output shaft 52 of the transmission 50.

A driven gear shaft of the right-angle power transfer gear mechanism 70 is located at a fourth vertical position which is lower than the third vertical position of the left and right front axles 80L and 80R.

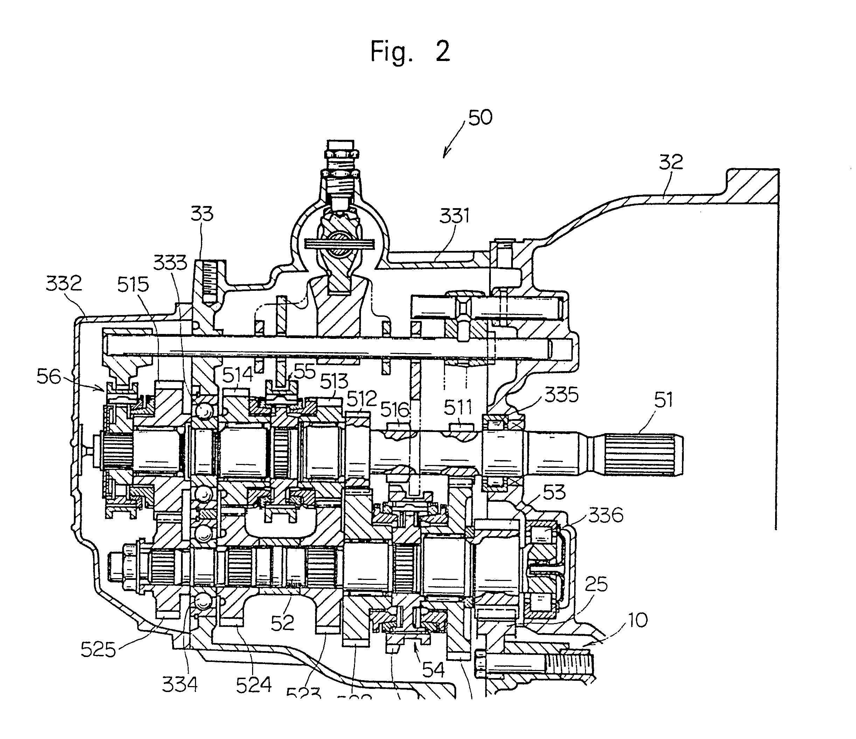

As shown in figure 2, the transmission 50 includes the input shaft 51 and the output shaft 52. The input shaft 51 and the output shaft 52 are mounted rotatably on a first portion 331 of the transmission casing 33 through bearings 333 and 334. An edge of the first portion 331 of the transmission casing 33 is secured to the clutch housing 32 and an opposite edge of the first portion 331 is secured to a second portion 332 of the transmission casing 33. The input shaft 51 and the output shaft 52 are also mounted rotatably on the clutch housing 32 through bearings 335 and 336.

A first driving gear 511, a second driving gear 512 and a reverse driving gear 516 are integrally secured to the input shaft 51 and a third driving gear 513, a fourth driving gear 514 and a fifth driving gear 515 are rotatably mounted on the input shaft 51. The reverse driving gear 516 is located between the first driving gear 511 and the second driving gear 512. The fourth driving gear 514 is located between the third driving gear 513 and the fifth driving gear 515. The third driving gear 513 is located at an outer side of the second driving gear 512. A first driven gear 521 and a second driven gear 522 are rotatably mounted on the output shaft 52 and a third driven gear 523, a fourth driven gear 524 and a fifth driven gear 525 are integrally secured to the output shaft 52. The first driving gear 511 engages with the first driven gear 521 and the second driving gear 512 engages with the second driven gear 522. The third driving gear 513 engages with the third driven gear 523 and the fourth driving gear 514 engages with the fourth driven gear 524. The fifth driving gear 515 engages with the fifth driven gear 525, and the reverse driving gear 516 engages with the reverese driven gear 526.

The first synchronizer clutch assembly 54 is mounted between the first driven gear 521 and the second driven gear 522 on the output shaft 52 and the reverse driven gear 526 is integrally secured to a sleeve of the first synchronizer clutch assembly 54. A second synchronizer clutch assembly 55 is mounted between the third driving gear 513 and the fourth driving gear 514 on the input shaft 51, and a third synchronizer clutch assembly 56 is mounted on an end of the input shaft 51 and at an outer of the fifth driving gear 515. The output gear 53 is mounted in the vicinity of an inner end of the output shaft 52 and on an inner side of the first driven gear 521. The output gear 53 engages with the final reduction gear 25, and the final reduction gear 25 is secured to the central differential gear assembly 10 by a bolt 26.

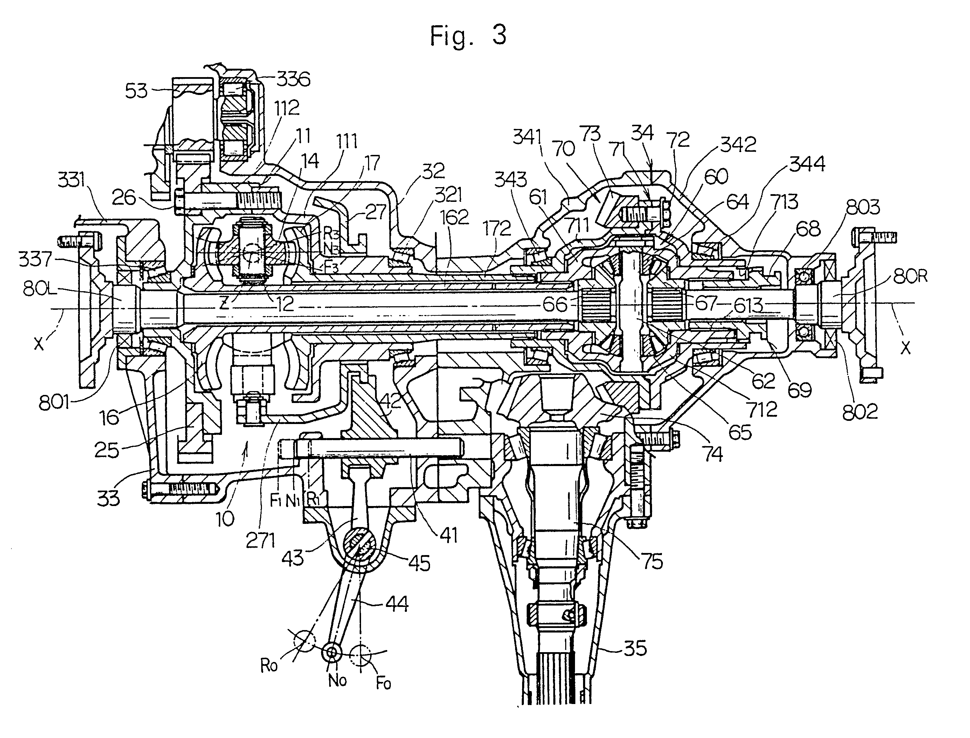

As shown in figure 3, the central differential gear assembly 10 includes a central differential gear housing 11 which includes a first portion 111 and a second portion 112. The first portion 111 of the central differential gear housing 11 is rotatably mounted on the clutch housing 32 through bearings 321 and the second portion 112 of the central differential gear housing 11 is rotatably mounted on the first portion 331 of the transmission casing 33 through bearings 337. The central differential gear assembly 10 has a rotational center axis «X» which coincides with the rotational axes of the front axles 80L and 80R.

A first side bevel gear 16 of the central differential gear assembly 10 includes a first hollow shaft portion 162 which is rotatably mounted on the left front axle 80L. A second side bevel gear 17 of the central differential gear assembly 10 includes a second hollow shaft portion 172 which is rotatably mounted on the first hollow shaft portion 162 of the first side bevel gear 16.

A first bevel pinion 14 is located between and engages with the first side bevel gear 16 and the second side bevel gear 17 and the first bevel pinion 14 rotates about a first cross shaft 12. The first cross shaft 12 rotates about a rotational center axis «Z» and even when the first cross shaft 12 rotates about the rotational center axis «Z» the first bevel pinion 14 engages with the first side bevel gear 16 and the second side bevel gear 17. The rotational center axis «Z» of the first cross shaft 12 is perpendicular to the rotational center axis «X» of the front axle 80L.

An end of the first hollow shaft 162 of the first side bevel gear 16 extends into the transaxle casing 34 and has outer splines which engage with inner splines formed on a front wheel differential gear housing 61 of a front wheel differential gear assembly 60.

An end of the second hollow shaft 172 of the second side bevel gear 17 extends into the transaxle casing 34 and has outer splines which engage with inner splines formed on a mounting casing 71 of the right-angle power transfer gear mechanism 70. The mounting casing 71 is rotatably mounted on the transaxle casing 34 through bearings 343 and 344 and the front wheel differential gear housing 61 is rotatably mounted within the mounting casing 71.

An actuator means includes a fork shaft 41, a fork member 42, an inner lever 43, an outer lever 44 and a distribution ratio change sleeve 27.

The fork shaft 41 is slidably mounted on the clutch housing 32 parallel to the rotational center axis «X» of the front axle 80L. The fork member 42 is integrally secured to the fork shaft 41 and the fork member 42 engages with the inner lever 43. The inner lever 43 is securely connected to the outer lever 44 which is located outside of the clutch housing 32. The inner lever 43 is rotatably mounted on the clutch housing 32 and the inner lever 43 rotates about a lever shaft 45, so that when the outer lever 44 is actuated the inner lever 43 forces the fork shaft 41 and the fork member 42 to move in a direction parallel the the rotational center axis «X» of the front axle 80L. The fork member 42 engages with the distribution ratio change sleeve 27 which is slidably mounted on the central differential gear housing 11. The distribution ratio change sleeve 27 includes a pair of arms 271.

Alternatively, the outer lever 44 may be actuated by a push-pull cable (not shown in drawings), a linkage mechanism (not shown in drawings) or an electrically controlled oil cylinder (not shown in drawings).

The front wheel differential gear assembly 60 includes front wheel differential gear housing 61, a cross pinion shaft 62, a first bevel pinion 64, a second bevel pinion 65, a first side bevel gear 66 and a second side bevel gear 67. The first side bevel gear 66 has inner splines which engage with outer splines of the right end of the left front axle 80L which is rotatably mounted within the first hollow shaft 162 of the first side bevel bear 16, the second portion 112 of the central differential gear housing 11 and the first portion 331 of the transmission casing 33. A seal member 801 is located between the first portion 331 of the transmission casing 33 and the left front axle 80L.

The first side bevel gear 66 engages with the first bevel pinion 64 and the second bevel pinion 65 and the second side bevel gear 67 also engages with the first bevel pinion 64 and the second bevel pinion 65. The second side bevel gear 67 has inner splines which engage with outer splines of the left end of the right front axle 80R. The right front axle 80R extends within the front wheel differential gear housing 61 and a second portion 342 of the transaxle casing 34. The right front axle 80R is mounted on the second portion 342 of the transaxle casing 34 through bearing 803 and a seal member 802 is located between the second portion 342 and the right front axle 80R.

Further, an engaging sleeve 68 is slidably mounted on the right front axle 80R. The engaging sleeve 68 includes first splines and second splines. The first outer splines of the engaging sleeve 68 engage with inner splines 613 formed within the front wheel differential gear housing 61 and the second outer splines of the engaging sleeve 68 engage selectively with inner splines 713 formed within a second portion 712 of the mounting case 71. Accordingly, when the engaging sleeve 68 of engagement device 69 engages with the inner splines 713 of the mounting case 71, the engaging sleeve 68 locks the front wheel differential gear housing 61 to the mounting case 71.

When the engaging sleeve 68 is not engaged to the inner splines 713 of the mounting case 71, the front wheel differential gear housing 61 is not locked to the mounting case 71.

The mounting case 71 includes a first portion 711 and a second portion 712. A ring gear 73 is secured to the first portion 711 and the second portion 712 of the mounting case 71 by a bolt 72. The first portion 711 of the mounting case 71 is rotatably mounted on a first portion 341 of the transaxle casing 34 through the bearings 343. The ring gear 73 engages with a driven bevel gear 74 of a driven gear shaft 75. The driven gear shaft 75 is covered with and rotatably mounted on a third portion 35 of the transaxle casing 34.

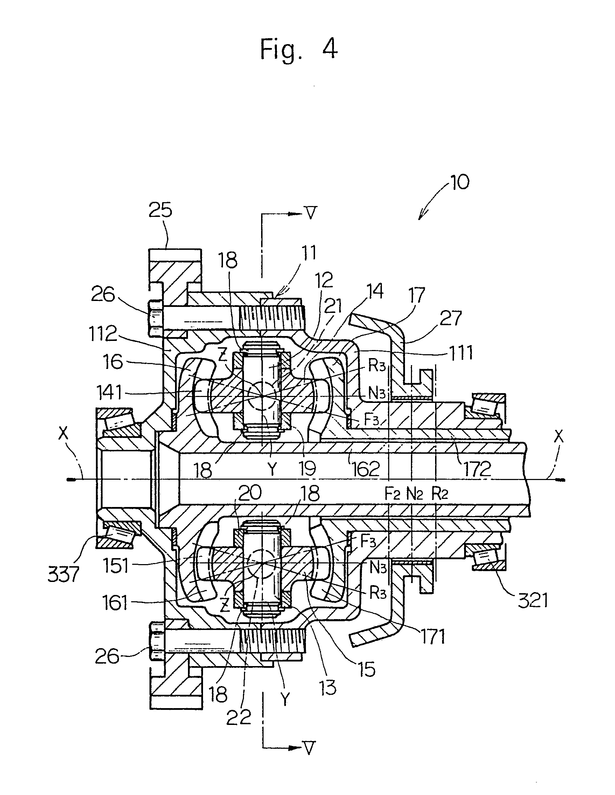

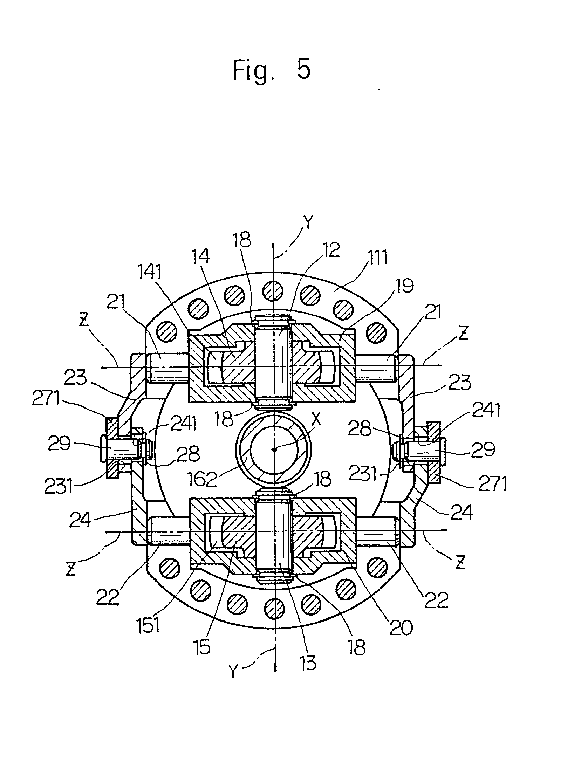

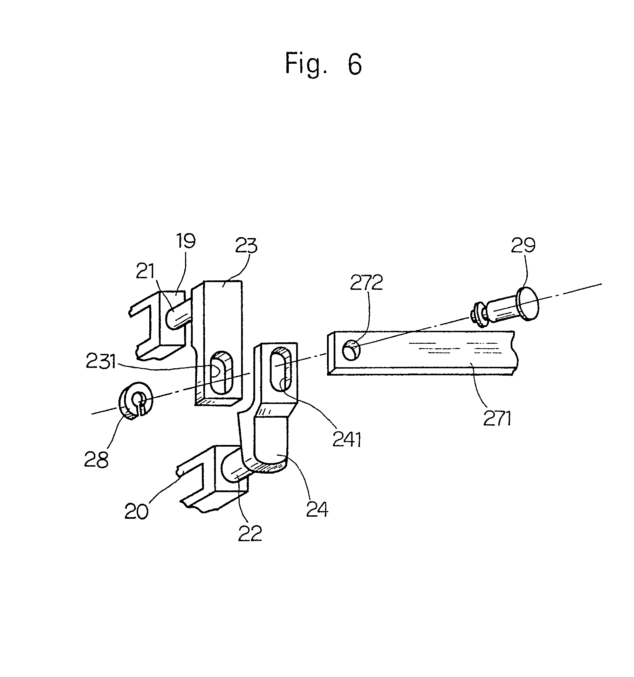

As shown in figures 4, 5 and 6, the central differential gear assembly 10 includes first cross pinion shaft 12 and second cross pinion shaft 13. The first cross pinion shaft 12 is located at one side of the first hollow shaft 162 and the second cross pinion shaft 13 is located at an opposite side of the first hollow shaft 162. The first cross pinion shaft 12 and the second cross pinion shaft 13 have rotational center axes «Y» which are perpendicular to the rotational center axis «X» of the first hollow shaft 162 of the first side bevel gear 16 in figure 5. The first bevel pinion 14 rotates about the first cross pinion shaft 12 and a second bevel pinion 15 rotates about the second cross pinion shaft 13. The first cross pinion shaft 12 is secured to the first pinion casing 19 by snap rings 18 and the first bevel pinion 14 rotates within the first pinion casing 19. The second cross pinion shaft 13 is secured to a second pinion casing 20 by snap rings 18 and the second bevel pinion 15 rotates within the second pinion casing 20.

Each of a pair of first supporting shafts 21 is integrally secured to one side of the first pinion casing 19. The remaining end of each of the first supporting shafts 21 extends out of the central differential gear housing 11. These ends of the first supporting shafts 21 are integrally secured to ends of first links 23 and an elongated opening 231 is defined within an opposite end of the first link 23. Each of a pair of second supporting shafts 22 is integrally secured to one side of the second pinion casing 20. The remaining end of each of the second supporting shafts 22 extends out of the central differential gear housing 11. These ends of the second supporting shafts 22 are integrally secured to ends of second links 24. An elongated opening 241 is defined within an opposite end of the second link 24. A pin 29 is inserted into an opening 272 of the arm 271 of the distribution ratio change sleeve 27, the elongated opening 241 of the second link 24 and the elongated opening 231 of the first link 23. The first link 23 and the second link 24 are connected to the arm 271 by the pin 29 and a snap ring 28.

The first supporting shafts 21 of the first pinion casing 19 have a rotational center axis «Z» which is perpendicular to the rotational center axis «Y» of the first cross pinion shaft 12. The first supporting shafts 21 are rotatably mounted on the central differential gear housing 11. The first pinion casing 19 and the first bevel pinion 14 rotate about the rotational center axis «Z» between the first side bevel gear 16 and the second side bevel gear 17.

The second supporting shafts 22 of the second pinion casing 20 have a rotational center axis «Z» which is perpendicular to the rotational center axis «Y» of the second cross pinion shaft 13. The second supporting shafts 22 are rotatably mounted on the central differential gear housing 11. The second pinion casing 20 and the second bevel pinion 15 rotate about the rotational center axis «Z» between the first side bevel gear 16 and the second side bevel gear 17.

The first portion 111 of the central differential gear housing 11 has a first contact surface, which is in contact with a second contact surface of the second portion 112 of the central differential gear housing 11. The first contact surface of the first portion 111 includes four recesses thereon and the second contact surface of the second portion 112 includes four recesses corresponding to the four recesses of the first contact surface. Four openings are thereby defined between the first portion 111 and the second portion 112 of the central differential gear housing 11 and the first and second supporting shafts 21 and 22 are inserted into the four openings.

The first side bevel gear 16 includes first teeth 161 which are arc shape in cross-section and the second side bevel gear 17 includes second teeth 171 which are arc shape in cross-section. The first teeth 161 face the second teeth 171. The first bevel pinion 14 includes teeth 141, which engage with the arc-shaped first and second teeth 161 and 171 of the first and second side bevel gears 16 and 17. The second bevel pinion 15 includes teeth 151, which also engage with the arc-shaped first and second teeth 161 and 171 of the first and second side bevel gears 16 and 17.

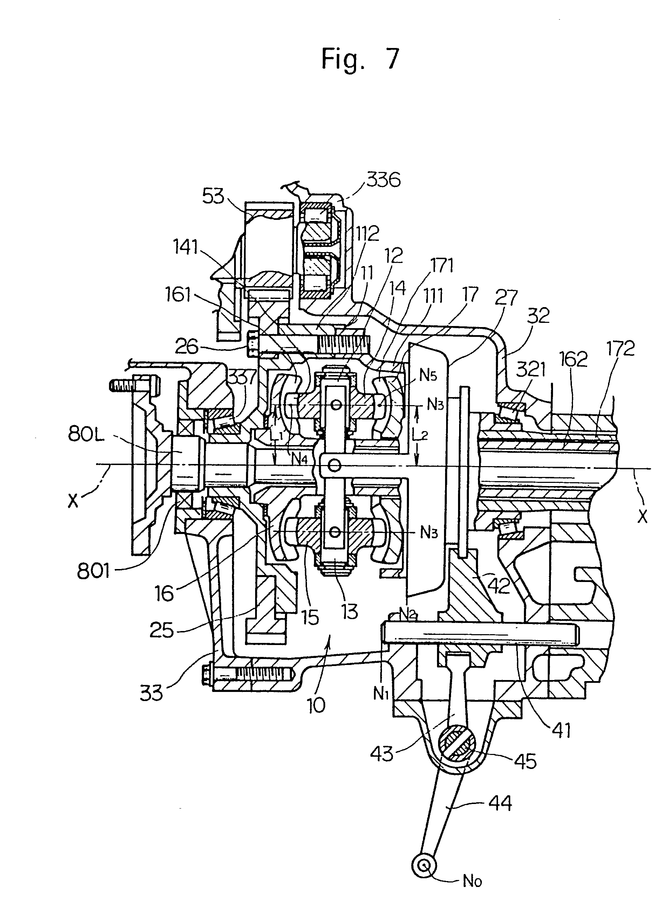

Accordingly, as shown in figure 7, which shows the assembly in neutral, when the outer lever 44 is in a neutral position «$N_0$» the fork shaft 41 is located at a first neutral position «$N_1$» and the distribution ratio change sleeve 27 is located at a second neutral position «$N_2$». In the neutral condition, the first and second cross shafts 12 and 13 are perpendicular to the rotational center axis «X» of the front axle 80L. As a result, radial directions of the bevel pinions 14 and 15 are located at third, neutral positions «$N_3$». The radial directions of the bevel pinions 14 and 15 are parallel to the rotational center axis «X» of the front axle 80L.

Engine torque is transmitted to the first and second side bevel gears 16 and 17 through the transmission 50, the final reduction gear 25, the central differential gear housing 11, the first and second supporting shafts 21 and 22, the first and second pinion casings 19 and 20, the first and second cross pinion shafts 12 and 13 and the first and second bevel pinions 14 and 15.

Accordingly, a first neutral engaging point «$N_4$» is defined between the first teeth 161 of the first side bevel gear 16 and the pinion teeth 141 of the first bevel pinion 14, and a second neutral engaging point «$N_5$» is defined between the second teeth 171 of the second side bevel gear 17 and the pinion teeth 141 of the first bevel pinion 14. A first distance «$L_1$», defined between the first neutral engaging point «$N_4$» and the rotational center axis «X», is equal to a second distance «$L_2$», defined between the second neutral engaging point «$N_5$» and the rotational center axis «X». Therefore, engine torque is distributed equally to the first side bevel gear 16 and to the second side bevel gear 17.

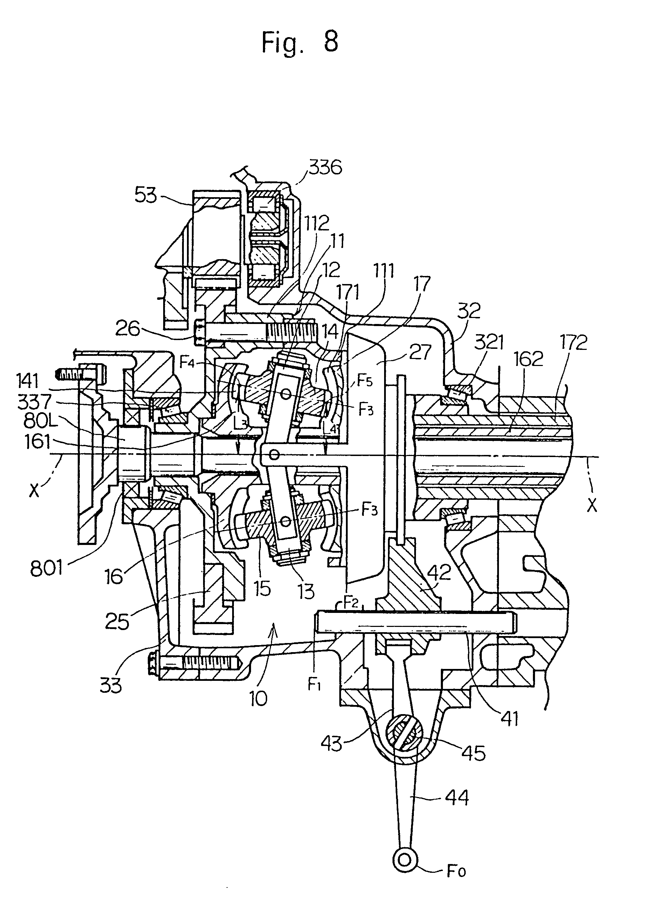

Figure 8 shows a forward condition when the outer lever 44 is positioned at a forward position «$F_0$» the fork shaft 41 is located at a first forward position «$F_1$» and the distribution ratio change sleeve 27 is located at a second forward position «$F_2$».

In the forward position, the first cross pinion shaft 12 is inclined to the right and the second cross pinion shaft 13 is inclined to the left as shown in figure 8. As a result, the radial directions of the bevel pinions 14 and 15 are inclined as shown by third forward positions «$F_3$».

Accordingly, a first forward engaging point «$F_4$» is defined between the first teeth 161 and the pinion teeth 141 and a second forward engaging point «$F_5$» is defined between the second teeth 171 and the pinion teeth 141. A third distance «$L_3$», defined between the first forward engaging point «$F_4$» and the rotational center axis «X», is longer than a fourth distance «$L_4$» defined between the second forward engaging point «$F_5$» and the rotational center axis «X».

Therefore, a first divided engine torque, distributed to the first side bevel gear 16 is greater than a second divided engine torque distributed to the second side bevel gear 17.

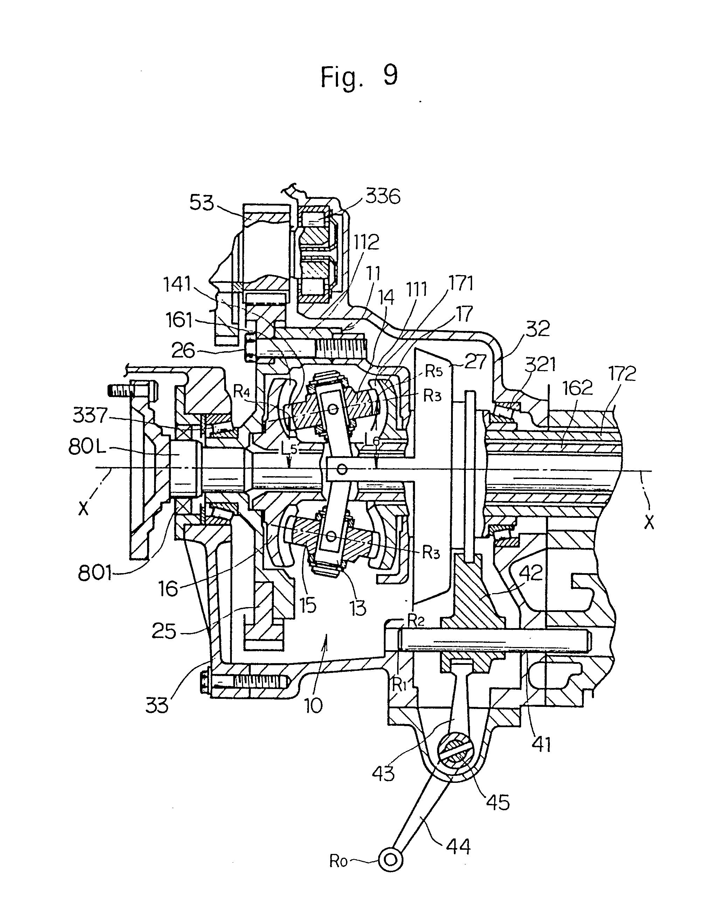

Figure 9 shows a rearward condition when the outer lever 44 is positioned at a rearward position «$R_0$», the fork shaft 41 is located at a first rearward position «$R_1$», and the distribution ratio change sleeve 27 is located at a second rearward position «$R_2$».

In the rearward condition, the first cross pinion shaft 12 is inclined to the left and the second cross pinion shaft 13 is inclined to the right as shown in figure 9. As a result, the radial directions of the bevel pinions 14 and 15 are inclined as shown by third rearward positions «$R_3$».

Accordingly, a first rearward engaging point «$R_4$», is defined between the first teeth 161 and the pinion teeth 141 and a second rearward engaging point «$R_5$» is defined between the second teeth 171 and the pinion teeth 141. A fifth distance «$L_5$», defined between the first rearward engaging point «$R_4$» and the rotational center axis «X», is shorter than a sixth distance «$L_6$» defined between the second rearward engaging point «$R_5$» and the rotational center axis «X».

Therefore, the first divided engine torque, distributed to the first side bevel gear 16, is smaller than the second divided engine torque distributed to the second side bevel gear 17.

The operation of the four-wheel vehicle drive system is described in detail hereinafter.

The engine torque, outputted from engine 30, is transmitted to the input shaft 51 of the transmission 50 through the clutch 40. The revolutions of the input shaft 51 are increased or decreased by the first through fifth and reverse driving gears, 511 through 516 and the first through fifth and reverse driven gears 521 through 526. The revolutions of the output shaft 52 are transmitted to the final reduction gear 25 through the output gear 53. The revolutions of the final reduction gear 25 are transmitted to the central differential gear housing 11 of the central differential gear assembly 10.

The torque, transmitted to the central differential gear housing 11, is transmitted to both the first bevel pinion 14 and the second bevel pinion 15 through the first and second supporting shafts 21 and 22, the first pinion casing 19 and the second pinion casing 20. The torque is then transmitted to both the first side bevel gear 16 and the second side bevel gear 17.

The first divided torque, transmitted to the first side bevel gear 16 is further transmitted to the front wheel differential gear assembly 60 through the first hollow shaft 162. The first divided torque is further divided between a right part and a left part through the bevel pinions 64 and 65, the first side bevel gear 66 and the second side bevel gear 67.

Accordingly, the right part of the first divided torque drives the right front wheel 84R through the right front axle 80R, the first constant velocity coupling unit 81R, the right output axle 82R and the second constant velocity coupling unit 83R. The left part of the first divided torque drives the front wheel 84L through the left front axle 80L, the first constant velocity coupling unit 81L, the left output axle 82L and the second constant velocity coupling unit 83L.

The second divided torque, transmitted to the second side bevel gear 17, is transmitted to the mounting case 71 of the right-angle power transfer gear mechanism 70 through the second hollow shaft 172. A rotational direction of the ring gear 73, mounted on the mounting case 71, is perpendicular to a rotational direction of the driven bevel gear 74. The second divided torque is transmitted to the rear wheel differential gear assembly 89 through the ring gear 73, the driven bevel gear 74, the driven gear shaft 75, the first universal coupling unit 85, the propeller shaft 86, the second universal coupling unit 87 and the rear final reduction gear 88. The second divided torque is further divided between a right part and a left part through the rear wheel differential gear assembly 89.

Accordingly, the right part of the second divided torque drives the right rear wheel 94R through the right rear axle 90R, the first constant velocity coupling unit 91R, the right output axle 92R and the second constant velocity coupling unit 93R. The left part of the second divided torque drives the left rear wheel 94L through the left rear axle 90L, the first constant velocity coupling unit 91L, the left output axle 92L and the second constant velocity coupling unit 93L.

Referring to figure 3, when the engaging sleeve 68 of the engagement device 69 disengages with the mounting case 71 (i.e., the front wheel differential gear housing 61 is free to rotate about the rotational center axis «X» independently from the mounting case 71), the first side bevel gear 16 and the second side bevel gear 17 of the central differential gear assembly 10 rotate respectively each other. Accordingly, the revolution is transmitted respectively to the front wheel differential gear assembly 60 and the ring gear 73 in accordance with an inverse ratio of an amount of a load on the front wheel differential gear assembly 60 to an amount of a load on the ring gear 73 of the right-angle power transfer gear mechanism 70.

On the other hand, when the engaging sleeve 68 of the engagement device 69 engages with both the front wheel differential gear housing 61 and the mounting case 71 (i.e., the front wheel differential gear housing 61 is locked to the mounting case 71), the first side bevel gear 16 and the second side bevel gear 17 of the central differential gear assembly 10 rotate together about the center axis «X».

Accordingly, the revolution is equally transmitted to the front wheel differential gear assembly 60 and the ring gear 73 of the right-angle power transfer gear mechanism 70.

When the outer lever 44 is moved from the neutral position «$N_0$» to the forward position «$F_0$» the inner lever 43 is rotated about the lever shaft 45 and the inner lever 43 forces the fork member 42 and the fork shaft 43 to move from the first neutral position «$N_1$» to the first forward position «$F_1$». The fork member 42 forces the distribution ratio change sleeve 27 to move from the second neutral position «$N_2$» to the second forward position «$F_2$». The arm 271 forces the first link 23 and the second link 24 to incline and then the first pinion casing 19 and the second pinion casing 20 are rotated respectively about the rotational center axes «Z» of the first and second supporting shafts 21 and 22. Accordingly, the first cross pinion shaft 14 and the second cross pinion shaft 15 are rotated with the first and second pinion casings 19 and 20. Then, the first and second pinion casings 19 and 20 incline the first and second bevel pinions 14 and 15 from the third neutral position «$N_3$» to the third forward position «$F_3$».

Therefore, as shown in figure 8, the third distance «$L_3$» is longer than the fourth distance «$L_4$», so that the central differential gear asembly 10 distributes the torque respectively to the first side bevel gear 16 and the second side bevel gear 17 in accordance with a ratio of the third distance «$L_3$» to the fourth distance «$L_4$». As a result, the first divided torque, transmitted to the first side bevel gear 16, becomes greater than the second divided torque transmitted to the second side bevel gear 17.

On the other hand, when the outer lever 44 is moved from the neutral position «$N_0$» to the rearward position «$R_0$» the inner lever 43 is rotated about the lever shaft 45 and the inner lever 43 forces the fork member 42 and the fork shaft 43 to move from the first neutral position «$N_1$» to the first rearward position «$R_1$». Further, the fork member 42 forces the distribution ratio change sleeve 27 to move from the second neutral position «$N_2$» to the second rearward position «$R_2$». The arm 271 forces the first link 23 and the second link 24 to incline, and then the first and second pinion casings 19 and 20 are rotated respectively about the rotational center axes «Z» of the first and second supporting shafts 21 and 22.

Accordingly, the first and second cross pinion shafts 14 and 15 are rotated with the first and second pinion casings 19 and 20. Then, the first and second pinion casings 19 and 20 incline the first and second bevel pinions 14 and 15 from the third neutral position «$N_3$» to the third rearward position «$R_3$».

Therefore, as shown in figure 9, the fifth distance «$L_5$» is shorter than the sixth distance «$L_6$», so that the central differential gear assembly 10 distributes the torque respectively to the first side bevel gear 16 and the second side bevel gear 17 in accordance with a ratio of the fifth distance «$L_5$» to the sixth distance «$L_6$». As a result, the first divided torque, transmitted to the first side bevel gear 16, becomes smaller than the second divided torque transmitted to the second side bevel gear 17.

Thus, a distribution ratio of the torque can be continuously changed by the movement of the outer lever 44.

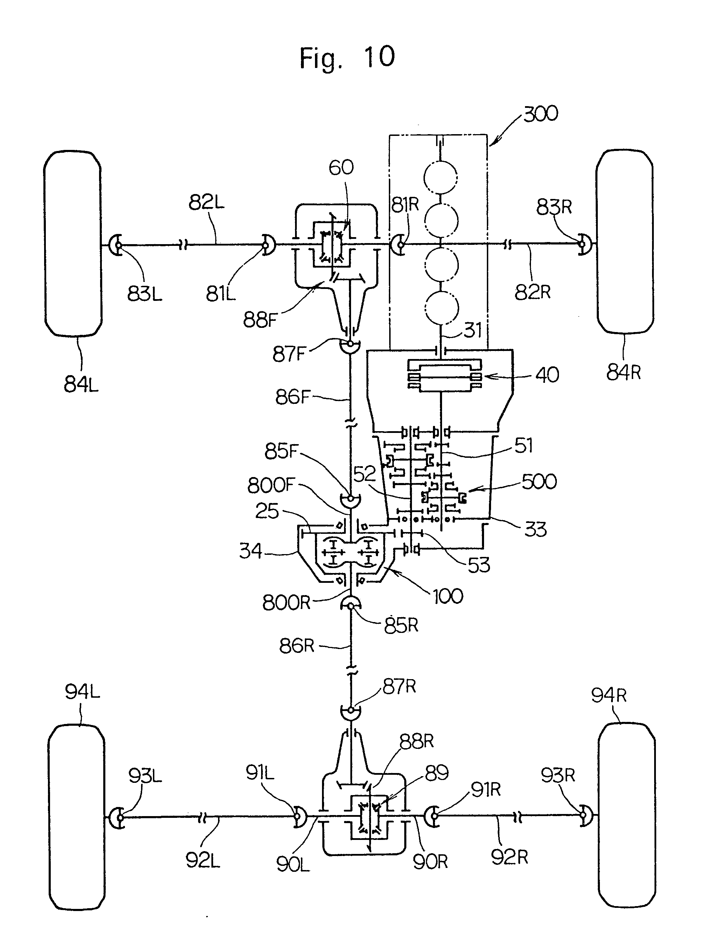

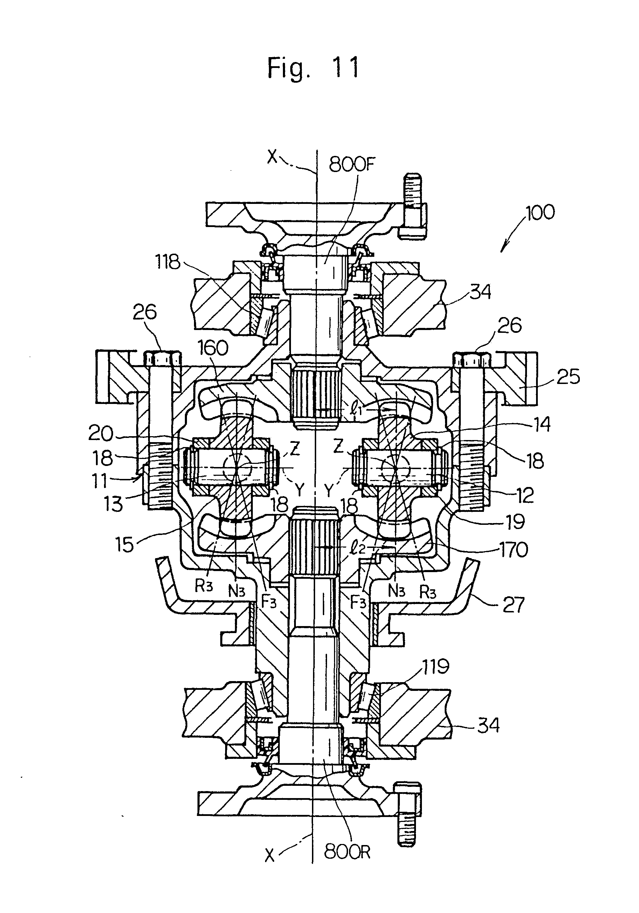

Figures 10 and 11 show a second embodiment of a four-wheel vehicle drive system according to the present invention. The second embodiment is substantially similar to the first embodiment as explained above. The major difference between the first embodiment and the second embodiment is in the central differential gear assembly 100.

An engine 300 and a transmission 500 are positioned in a parallel relationship to a longitudinal direction of a vehicle. A rotational center axis of a crank shaft 31 is parallel to the longitudinal direction of the vehicle and a transaxle casing 34 is mounted on one side of a transmission casing 33 of the transmission 500.

As shown in figure 10, the central differential gear assembly 100 is located at substantially a center of the vehicle and an output gear 53 of the transmission 500 engages with a final reduction gear 25 of the central differential gear assembly 100.

As shown in figure 11, the final reduction gear 25 is secured to the central differential gear housing 11. A first side bevel gear 160 is located at a front position and a second side bevel gear 170 is located at a rear position of the central differential gear housing 11. A first set of teeth of the first side bevel gear 160 faces a second set of teeth of the second side bevel gear 170 and a first and second bevel pinions 14 and 15 are located between the first and second side bevel gears 160 and 170. The first bevel pinion 14 rotates about a first cross pinion shaft 12 and the second bevel pinion 15 rotates about a second cross pinion shaft 13. In a similar manner to the first embodiment described above, the first and second cross pinion shafts 12 and 13 can rotate about rotational center axes «Z».

A first engaging point is defined between the first set of teeth of the first side bevel gear 160 and pinion teeth of the first and second bevel pinions 14 and 15, and a second engaging point is defined between the second set of teeth of the second bevel gear 170 and pinion teeth of first and second bevel pinions 14 and 15. Further, a first distance «$\ell_1$» is defined between the first engaging point and a rotational center axis «X» and a second distance «$\ell_2$» is defined between

the second engaging point and the rotational center axis «X».

Therefore, a ratio of the first distance «$\ell_1$» to the second distance «$\ell_2$» is changed by rotations of the first and second cross pinion shafts 12 and 13. As a result, a distribution ratio, of the torque transmitted to the first side bevel gear 160 to the torque transmitted to the second side bevel gear 170, is continuously changed in accordance with the ratio of the first distance «$\ell_1$» to the second distances «$\ell_2$».

Further, the first side bevel gear 160 has inner splines which engage with the outer splines formed in a rear end of a front driven gear shaft 800F. The second side bevel gear 170 has inner splines which engage with the outer splines formed in a front end of a rear driven gear shaft 800R.

Furthermore, the central differential gear housing 11 is rotatably mounted on a transaxle casing 34 through bearings 118 and 119.

As shown in figure 10, a front end of the front driven gear shaft 800L is connected to a first universal coupling unit 85F which is connected to a rear end of a front propeller shaft 86F. A front end of the front propeller shaft 86F is connected to a front final reduction gear 88F of a front wheel differential gear assembly 60 through a second universal coupling unit 87F.

The front wheel differential gear assembly 60 includes first and second side bevel gears. The first side bevel gear is connected to a first constant velocity coupling unit 81L and the second side bevel gear is connected to a first constant velocity coupling unit 81R.

A rear end of the rear driven gear shaft 800R is connected to a first universal coupling unit 85R which is connected to a front end of a rear propeller shaft 86R. A rear end of the rear propeller shaft 86R is connected to a front final reduction gear 88R of a rear wheel differential gear assembly 89 through a second universal coupling unit 87R.

As described herein, the present invention overcomes the shortcomings of the known art by providing a central differential gear assembly which can change a distribution ratio of torque transmitted to wheels to torque transmitted to rear wheels.

**Claims**

1. A four-wheel drive system for use in a vehicle comprising a first and second pair of wheels (84L, 84R, 94L, 94R), power unit (30) including an output shaft (31), and a power transmission gear unit (50) including input and output shafts (51, 52), the input shaft (51) of the power transmission gear unit (50) being selectively connected to the output shaft (31) of the power unit (30), the output shaft (52) of the power transmission gear unit (50) selectively being in driving engagement with the input shaft (51) of the power transmission gear unit (50), an engagement member (25) being rotatable about a first rotational axis (X), the engagement member (25) being rotatable about a first rotational axis (X), the engagement member (25) being held in driving engagement with the output shaft (52) of the power transmission gear unit (50), a central differential gear assembly (10) including a central input member (11), a first central output member (16), a second central output member (17), a first wheel differential gear assembly (60) including a first wheel input member (61) and two first-wheel output members (66, 67), the two first-wheel output members (66, 67) being rotatable at different speeds about rotational axes and being held in driving engagement with the first wheel input member (61), and a second wheel differential gear assembly (89) including a second wheel input member and two second-wheel output members, the two second wheel output members being rotatable at different speeds about rotational axes and being held in driving engagement with the second wheel input member, characterized in that the central differential gear assembly (10) further comprises a first adjustment member (14) and an adjustment means, the central input member (11) is fixed to and coaxially rotatable with the engagement member (25) about the first rotational axis (X) of the engagement member (25), the first and second central output members (16, 17) are rotatable at different speeds about rotational axes substantially aligned with the first rotational axis (X) of the engagement member (25), the first adjustement member (14) engages with the first central output member (16) and the second central output member (17), the first adjustment member (14) being rotatably mounted on the central input member (11) about the first rotational axis (X) and is rotatable about a second rotational axis (Z), the second rotational axis (Z) is perpendicular to the first rotational axis (X) of the engagement member (25), the first adjustment member (14) is rotated about the second rotational axis (Z) by the adjusting means, a distribution ratio being defined between torque transmitted to the first central output member (16) and torque transmitted to the second central output member (17), the first wheel input member (61) is connected to the first central output member (16) of the central differential gear assembly (10), the second wheel input member is connected to the second central output member (17) of the central differential gear assembly (10), whereby when the first adjustment member (14) is rotated about the second rotational axis (Z) by the adjustment means the distribution ratio changes.

2. The four-wheel drive system as claimed in claim 1, wherein the first adjustment member (14) has first and second engagement points ($N_4$, $F_4$, $R_4$, $N_5$, $F_5$, $R_5$), the first adjustment member (14) engages with the first central output member (16) at the first engagement point ($N_4$, $F_4$, $R_4$), the first engagement point ($N_4$, $F_4$, $R_4$) is spaced a first distance ($L_1$, $L_3$, $L_5$, $\ell_1$) from the first rotational axis (X) of the engagement member (25), the first adjustment member (14) engages with the second central output member (17) at the second engagement point ($N_5$, $F_5$, $R_5$), the second engagement point ($N_5$, $F_5$, $R_5$) is spaced a second distance ($L_2$, $L_4$, $L_6$, $\ell_2$) from the first rotational axis (X) of the engagement member (25), a distance ratio being defined between the first distance ($L_1$, $L_3$, $L_5$, $\ell_1$) and the second distance ($L_2$, $L_4$, $L_6$, $\ell_2$), the distance ratio corresponding to the distribution ratio, whereby when the first adjustment member (14) is rotated about the second rotational axis (Z) by the adjustment means the distance ratio is changed.

3. The four-wheel drive system as claimed in claim 2, wherein the adjusting means further comprises an adjustment sleeve (27) and a first adjustment link (23), the adjustment sleeve (27) is slidably mounted on the central input member (11), a first end of the first adjustment link (23) is rotatably connected to the adjustment sleeve (27) and a second end of the first adjustment link (23) is secured to the first adjustment member (14), whereby when the adjustment sleeve (27) slides, the first adjustment link (23) and the first adjustment member (14) rotate about the second rotational axis (Z).

4. The four-wheel drive system as claimed in claim 3, wherein the adjusting means further comprises a first casing (19) and a first pinion shaft (12), the first casing (19) is fixed to the first adjustment link (23), the first pinion shaft (12) is fixed to the first casing (19), the first adjustment member (14) is rotatably mounted on the first pinion shaft (12), the first pinion shaft (12) is perpendicular to the second rotational axis (Z), whereby when the first adjustment link (23) is rotated, the adjustment member (14) is rotated about the second rotational axis (Z) with the first casing (19) and about the first pinion shaft (12).

5. The four-wheel drive system as claimed in claim 3, wherein the adjusting means further comprises an adjustment lever (44) connected to the adjustment sleeve (27).

6. The four-wheel drive system as claimed in claim 4, wherein the adjusting means further comprises a second adjustment link (24), a second casing (20), a second pinion shaft (13) and a second adjustment member (15), a first end of the second adjustment link (24) is rotatably mounted on the adjustment sleeve (27), the second casing (20) is fixed to a second end of the first adjustment link (24), the second adjustment member (15) is rotatably mounted on the second pinion shaft (13) which is fixed to the second casing (20), the first casing (19) is located on one side of the first rotational axis (X) of the engagement member (25) and the second casing (20) is located on an opposite side of the first rotational axis (X) of the engagement member (25).

7. The four-wheel drive system as claimed in claim 2, wherein the adjustment member (14) includes cross-sectional arc shape teeth (141) and the first and second central output members (16, 17) include cross-sectional arc shape teeth (161, 171), whereby the cross-sectional arc shaped teeth (141) of the adjustment member (14) engage with the cross-sectional arc shape teeth (161, 171) of both the first and second central output members (16, 17) even when the adjustment member (14) rotates about the second rotational axis (Z).

8. The four-wheel drive system as claimed in claim 4, wherein the first casing (19) of the adjusting means further comprises a pair of support shafts (21) extending outwardly from the first casing (19) perpendicular to the direction of the pinion shaft (12), the pair of support shafts (21) are rotatably mounted on the central input member (11), the pair of support shafts (21) have a coaxis aligned with the second rotational axis (Z), the adjustment link (23) is fixed to the support shaft (21).

9. The four-wheel drive system as claimed in claim 7, wherein the central input member (11) comprises a first portion (111) and a second portion (112), the first portion (111) has a pair of first recesses, the second portion (112) has a pair of second recesses corresponding to the pair of first recesses, whereby when the first portion (111) is secured to the second portion (112), a pair of openings are defined on the central input member (11) and the pair of support shafts (21, 22) are inserted into the pair of openings.

## Patentansprüche

1. Vierradantrieb zur Verwendung in einem Fahrzeug, umfassend ein erstes und ein zweites Räderpaar (84L, 84R, 94L, 94R), ein Triebwerk (30) mit einer Abtriebswelle (31) und ein Kraftübertragungsgetriebe (50) mit Antriebs- und Abtriebswellen (51, 52), wobei die Antriebswelle (51) des Kraftübertragungsgetriebes (50) selektiv mit der Abtriebswelle (31) des Triebwerkes (30) verbunden ist, die Abtriebswelle (52) des Kraftübertragungsgetriebes (50) selektiv mit der Antriebswelle (51) des Kraftübertragungsgetriebes (50) in antriebsmässigem Eingriff steht, ein Eingriffsteil (25) um eine erste Rotationsachse (X) drehbar ist, und das Eingriffsteil (25) in antriebsmässigem Eingriff mit der Abtriebswelle (52) des Kraftübertragungsgetriebes (50) gehalten wird, ein zentrales Differentialgetriebe (10) mit einem zentralen Antriebsteil (11), ein erstes zentrales Abtriebsteil (16), ein zweites zentrales Abtriebsteil (17), ein erstes Rad-Differentialgetriebe (60) mit einem ersten Rad-Antriebsteil (61) und zwei ersten Rad-Abtriebsteilen (66, 67), wobei sich die beiden ersten Rad-Abtriebsteile (66, 67) bei unterschiedlichen Umdrehungszahlen um Rotationsachsen drehen können und in antriebsmässigem Eingriff mit dem ersten Rad-Antriebsteil (61) gehalten werden, und ein zweites Rad-Differentialgetriebe (89) mit einem zweiten Rad-Antriebsteil und zwei zweiten Rad-Abtriebsteilen, wobei sich die beiden zweiten Rad-Abtriebsteile bei unterschiedlichen Umdrehungszahlen um Rotationsachsen drehen können und in antriebsmässigem Eingriff mit dem zweiten Rad-Antriebsteil gehalten werden, dadurch gekennzeichnet, dass das zentrale Differentialgetriebe (10) weiterhin ein erstes Ausgleichsteil (14) und Ausgleichsmittel enthält, das zentrale Antriebsteil (11) an dem Eingriffsteil (25) befestigt und koaxial mit diesem um die erste Rotationsachse (X) des Eingriffsteiles (25) drehbar ist, die ersten und zweiten zentralen Abtriebsteile (16, 17) sich bei unterschiedlichen Umdrehungszahlen um Rotationsachsen drehen können, die im wesentlichen mit der ersten Rotationsachse (X) des Eingriffsteiles (25) ausgerichtet sind, das erste Ausgleichteil (14) mit dem ersten zentralen Abtriebsteil (16) und dem zweiten zentralen Abtriebsteil (17) in Eingriff steht, das erste Ausgleichsteil (14), das an dem zentralen Antriebsteil (11) drehbar um die erste Rotationsachse (X) angebracht ist, um eine zweite Rotationsachse (Z) drehbar ist, die zweite Rotationsachse (Z) lotrecht zu der ersten Rotationsachse (X) des Eingriffteiles (25) liegt, das erste Ausgleichsteil (14) durch die Ausgleichsmittel um die zweite Rotationsachse (Z) gedreht wird, wobei ein Verteilungsverhältnis zwischen Drehmoment übertragen an den ersten zentralen Abtriebsteil (16) und Drehmoment übertragen an den zweiten zentralen Abtriebsteil (17) begrenzt wird, das erste Rad-Antriebsteil (61) mit dem ersten zentralen Abtriebsteil (16) des zentralen Differentialgetriebes (10) verbunden ist, das zweite Rad-Antriebsteil mit dem zweiten zentralen Abtriebsteil (17) des zentralen Differentialgetriebes (10) verbunden ist, wodurch sich das Verteilungsverhältnis ändert, wenn das erste Ausgleichsteil (14) durch die Ausgleichsmittel um die zweite Rotationsachse (Z) gedreht wird.

2. Vierradantrieb nach Anspruch 1, worin das erste Ausgleichsteil (14) erste und zweite Eingriffsstellen (N$_4$, F$_4$, R$_4$, N$_5$, F$_5$, R$_5$) aufweist, das erste Ausgleichsteil (14) mit dem ersten zentralen Abtriebsteil (16) an der ersten Eingriffsstelle (N$_4$, F$_4$, R$_4$) in Eingriff kommt, die erste Eingriffsstelle (N$_4$, F$_4$, R$_4$) mit einem ersten Abstand (L$_1$, L$_3$, L$_5$, $\ell_1$) von der ersten Rotationsachse (X) des Eingriffsteiles (25) angeordnet ist, das erste Ausgleichsteil (14) mit dem zweiten zentralen Abtriebsteil (17) an der zweiten Eingriffsstelle (N$_5$, F$_5$, R$_5$) in Eingriff kommt, die zweite Eingriffsstelle (N$_5$, F$_5$, R$_5$) mit einem zweiten Abstand (L$_2$, L$_4$, L$_6$, $\ell_2$) von der ersten Rotationsachse (X) des Eingriffsteiles (25) angeordnet ist, wobei ein Abstandsverhältnis zwischen dem ersten Abstand (L$_1$, L$_3$, L$_5$, $\ell_1$) und dem zweiten Abstand (L$_2$, L$_4$, L$_6$, $\ell_2$) begrenzt wird, und das Abstandsverhältnis dem Verteilungsverhältnis entspricht, wodurch sich das Abstandsverhältnis ändert, wenn das erste Ausgleichsteil (14) durch die Ausgleichsmittel um die zweite Rotationsachse (Z) gedreht wird.

3. Vierradantrieb nach Anspruch 2, worin die Ausgleichsmittel weiterhin eine Ausgleichsmuffe (27) und ein erstes Ausgleichsglied (23) enthalten, die Ausgleichsmuffe (27) gleitbar an dem zentralen Antriebsteil (11) angebracht ist, ein erstes Ende des ersten Ausgleichsgliedes (23) drehbar mit der Ausgleichsmuffe (27) verbunden ist, und ein zweites Ende des ersten Ausgleichsgliedes (23) an dem ersten Ausgleichsteil (14) befestigt ist, wodurch sich das erste Ausgleichsglied (23) und das erste Ausgleichsteil (14) um die zweite Rotationsachse (Z) drehen, wenn sich die Ausgleichsmuffe (23) gleitend bewegt.

4. Vierradantrieb nach Anspruch 3, worin die Ausgleichsmittel weiterhin ein erstes Gehäuse (19) und eine erste Ritzelwelle (12) enthalten, das erste Gehäuse (19) an dem ersten Ausgleichsglied (23) befestigt ist, die erste Ritzelwelle (12) an dem ersten Gehäuse (19) befestigt ist, das erste Ausgleichsteil (14) drehbar an der ersten Ritzelwelle (12) angebracht ist, die erste Ritzelwelle (12) lotrecht zu der zweiten Rotationsachse (Z) liegt, wodurch sich das Ausgleichsteil (14) um die zweite Rotationsachse (Z) mit dem ersten Gehäuse (19) und um die erste Ritzelwelle (12) dreht, wenn das erste Ausgleichsglied (23) gedreht wird.

5. Vierradantrieb nach Anspruch 3, worin die Ausgleichsmittel weiterhin einen Ausgleichshebel (44) enthalten, der mit der Ausgleichsmuffe (27) verbunden ist.

6. Vierradantrieb nach Anspruch 4, worin die Ausgleichsmittel weiterhin ein zweites Ausgleichsglied (24), ein zweites Gehäuse (20), eine zweite Ritzelwelle (13) und ein zweites Ausgleichsteil (15) umfassen, wobei ein erstes Ende des zweiten Ausgleichsgliedes (24) drehbar an der Ausgleichsmuffe (27) angebracht ist, das zweite Gehäuse (20) an einem zweiten Ende des ersten Ausgleichsgliedes (24) befestigt ist, das zweite Ausgleichsteil (15) drehbar an der zweiten Ritzelwelle (13) angebracht ist, die an dem zweiten Gehäuse (20) befestigt ist, das erste Gehäuse (19) sich auf einer Seite der ersten Rotationsachse (X) des Eingriffteiles (25) befindet, und das zweite Gehäuse (20) sich auf einer entgegengesetzten Seite der ersten Rotationsachse (X) des Eingriffsteiles (25) befindet.

7. Vierradantrieb nach Anspruch 2, worin das Ausgleichsteil (14) Zähne mit bogenförmigem Querschnitt (141) enthält und die ersten und zweiten zentralen Abtriebsteile (16, 17) Zähne mit bogenförmigem Querschnitt (161, 171) enthalten, wodurch die Zähne mit bogenförmigem Querschnitt (141) des Ausgleichteiles (14) mit den Zähnen mit bogenförmigem Querschnitt (161, 171) der ersten sowie der zweiten zentralen Abtriebsteile (16, 17) in Eingriff stehen, auch wenn das Ausgleichsteil (14) sich um die zweite Rotationsachse (Z) dreht.

8. Vierradantrieb nach Anspruch 4, worin das erste Gehäuse (19) der Ausgleichsmittel weiterhin ein Tragwellenpaar (21) umfasst, das sich von dem ersten Gehäuse (19) lotrecht zur Richtung der Ritzelwelle (12) nach aussen erstreckt, wobei das Tragwellenpaar (21) drehbar an dem zentralen Antriebsteil (11) angebracht ist, das Tragwellenpaar (21) eine Koachse aufweist, die mit der zweiten Rotationsachse (Z) ausgerichtet ist, und das Ausgleichsglied (23) an der Tragwelle (21) befestigt ist.

9. Vierradantrieb nach Anspruch 7, worin das zentrale Antriebsteil (11) ein erstes Stück (111) und ein zweites Stück (112) umfasst, wobei das erste Stück (111) ein Paar erste Vertiefungen aufweist, das zweite Stück (112) ein Paar zweite Vertiefungen aufweist, die dem ersten Vertiefungspaar entsprechen, wodurch an dem zentralen Antriebsteil (11) ein Öffnungspaar begrenzt wird und das Tragwellenpaar (21, 22) in das Öffnungspaar eingefügt wird, wenn das erste Stück (111) an dem zweiten Stück (112) befestigt wird.

**Revendications**

1. Un véhicule à quatre roues motrices comportant un premier et second couples de roues (84L, 84R, 94L, 94R), une unité motrice (30) comportant un arbre de sortie (31) et une unitée d'engrenage de transmission de puissance (50) comportant les arbres d'entrée et de sortie (51, 52), l'arbre d'entrée (51) de l'unité d'engrenage de transmission de puissance (50) étant sélectivement relié à l'arbre de sortie (31) de l'unité motrice (30), à l'arbre de sortie (52) de l'unité d'engrenage de transmission de puissance (50) étant sélectivement en prise motrice avec l'arbre d'entrée (51) de l'unité d'engrenage de transmission de puissance (50), un organe de mise en prise (25) pouvant tourner autour d'un premier axe de rotation (X), l'organe de mise en prise (25) étant tenu en prise motrice avec l'arbre de sortie (52) de l'unité d'engrenage de transmission de puissance (50), un ensemble d'engrenage différentiel central (10) comportant un organe d'entrée central (11), un premier organe de sortie central (16), un second organe de sortie central (17), un premier ensemble d'engrenage différentiel de roues (60) comportant un premier organe d'entrée de roues (61) et deux premiers organes de sortie de roues (66, 67), les deux premiers organes de sortie de roues (66, 67) pouvant tourner à différentes vitesses autour des axes de rotation et étant tenus en prise motrice avec le premier organe d'entrée de roues (60), et un second ensemble d'engrenage différentiel de roues (89) comportant un second organe d'entrée de roues et deux seconds organes de sortie de roues, les deux seconds organes de sortie de roues pouvant tourner à différentes vitesses autour des axes de rotation et étant tenus en prise motrice avec le second organe d'entrée de roues, caractérisé en ce que l'ensemble d'engrenage différentiel central (10) comporte en outre un premier organe de réglage (14) et des moyens de réglage, que l'organe d'entrée central (11) est fixé sur et susceptible de tourner coaxialement avec l'organe de mise en prise (25) autour du premier axe de rotation (X) de l'organe de mise en prise (25), que les premier et second organes de sortie centraux (16, 17) peuvent tourner à différentes vitesses autour des axes de rotation sensiblement alignés avec le premier axe de rotation (X) de l'organe de mise en prise (25), que le premier organe de réglage (14) se met en prise avec le premier organe de sortie central (16) et le second organe de sortie central (17), que le premier organe de réglage (14) est monté à rotation sur l'organe d'entrée central (11) autour du premier axe de rotation (X) et peut tourner autour d'un second axe de rotation (Z), que le second axe de rotation est perpendiculaire au premier axe de rotation (X) de l'organe de mise en prise (25), que le premier organe de réglage (14) est tourné autour du second axe de rotation (Z) par les moyens de réglage, qu'un rapport de répartition est défini entre le couple transmis au premier organe de sortie central (16) et le couple transmis au second organe de sortie central (17), que le premier organe d'entrée de roues (61) est relié au premier organe de sortie central (16) de l'ensemble d'engrenage différentiel central (10), que le second organe d'entrée de roues est relié au second organe de sortie central (17) de l'ensemble d'engrenage différentiel central (10), où, si le premier organe de réglage (14) est tourné autour du second axe de rotation (Z) par les moyens de réglage, le rapport de répartition change.

2. Le véhicule à quatre roues motrices selon la revendication 1, dans lequel le premier organe de réglage (14) présente des premier et second points d'engrènement ($N_4$, $F_4$, $R_4$, $N_5$, $F_5$, $R_5$), le premier organe de réglage (14) se met en prise avec le premier organe de sortie central (16) au premier point d'engrènement ($N_4$, $F_4$, $R_4$) lequel est espacé à une première distance ($L_1$, $L_3$, $L_5$, $\ell_1$) du premier axe de rotation (X) de l'organe de mise en prise (25), le premier organe de réglage (14) se met en prise avec le second organe de sortie central (17) à un second point d'engrènement ($N_5$, $F_5$, $R_5$), lequel est espacé à une seconde distance ($L_2$, $L_4$, $L_6$, $\ell_2$) du premier axe de rotation (X) de l'organe de mise en prise (25), un rapport de distance étant défini entre la première distance ($L_1$, $L_3$, $L_5$, $\ell_1$) et la seconde distance ($L_2$, $L_4$, $L_6$, $\ell_2$), le rapport de distance correspondant au rapport de répartition, où quand le premier organe de réglage (14) est tourné autour du second axe de rotation (Z) par les moyens de réglage, le rapport de distance est changé.

3. Le véhicule à quatre roues motrices selon la revendication 2, dans lequel les moyens de réglage comportent en outre un manchon de réglage (27) et une première biellette de réglage (23), le manchon de réglage (27) est monté coulissable sur l'organe d'entrée central (11), une première extrémité de la première biellette de réglage (23) est relié à rotation au manchon de réglage (27) et une seconde extrémité de la première biellette de réglage (23) est fixée sur le premier organe de réglage (14) où, quand le manchon de réglage (27) glisse, la première biellette de réglage (23) et le premier organe de réglage (14) tournent autour du second axe de rotation (Z).

4. Le véhicule à quatre roues motrices selon la revendication 3, dans lequel les moyens de réglage comportent un premier carter (19) et un premier arbre de pignon (12), le premier carter (19) est fixé sur la première biellette de réglage (23), le premier arbre de pignon (12) est fixé sur le premier carter (19), le premier organe de réglage (14) est monté à rotation sur le premier arbre de pignon (12), le premier arbre de pignon (12) est perpendiculaire au second axe de rotation (Z), où, quand la première biellette de réglage (23) est tournée, l'organe de réglage (14) est tourné autour du second axe de rotation (Z) avec le premier carter (19) et autour du premier arbre de pignon (12).

5. Le véhicule à quatre roues motrices selon la revendication 3, dans lequel les moyens de réglage comportent en outre un levier de réglage (44) relié au manchon de réglage (27).

6. Le véhicule à quatre roues motrices selon la revendication 4, dans lequel les moyens de réglage comportent en outre une seconde biellette de réglage (24), un second carter (20), un second arbre de pignon (13) et un second organe de réglage (15), une première extrémité de la seconde biellette de réglage (24) est montée à rotation sur le manchon de réglage (27), le second carter (20) est fixé sur une seconde extrémité de la première biellette de réglage (24), le second organe de réglage (15) est monté à rotation sur le second arbre de pignon (13) qui est fixé sur le second carter (20), le premier carter (19) est placé sur un côté du premier axe de rotation (X) de l'organe de mise en prise (25) et le second carter (20) est placé sur le côté opposé du premier axe de rotation (X) de l'organe de mise en prise (25).

7. Le véhicule à quatre roues motrices selon la revendication 2, dans lequel l'organe de réglage (14) comporte une denture (141) cintrée en coupe transversale et les premier est second organes de sortie centraux (16, 17) comportent des dentures (161, 171) cintrées en coupe transversale, où les dentures (141) cintrées en coupe transversale de l'organe de réglage (14) se mettent en prise avec les dentures (161, 171) cintrées en coupe transversale des deux premier et second organes de sortie centraux (16, 17) même si l'organe de réglage (14) tourne autour du second axe de rotation (Z).

8. Le véhicule à quatre roues motrices selon la revendication 4, dans lequel le premier carter (19) des moyens de réglage comporte en outre une paire d'arbres de support (21) s'étandant à l'extérieur du premier carter (19) perpendiculairement à la direction de l'arbre de pignon (12), la paire d'arbres de support (2) est monté à rotation sur l'organe d'entrée central (11), les deux arbres de support (21) sont alignés coaxialement avec le second axe de rotation (Z), la biellette de réglage (23) est fixée sur l'arbre de support (21).

9. Le véhicule à quatre roues motrices selon la revendication 7, dans lequel l'organe d'entrée central (11) comporte une première partie (111) et une seconde partie (112), la première partie (111) présente une paire de premières cannelures, la seconde partie (112) présente une paire de secondes cannelures correspondant à la paire de premières cannelures, où, si la première partie (111) est fixée à la seconde partie (112) une paire d'orifices est défini sur l'organe d'entrée central (11) et la paire d'arbres de support (21, 22) est introduit dans la paire d'orifices.

## Fig. 1

Fig. 2

Fig. 3

EP 0 208 478 B1

# Fig. 4

Fig. 5

Fig. 6

# Fig. 7

# Fig. 8

## Fig. 9

Fig. 10

Fig. 11